# EUROPÄISCHE PATENTSCHRIFT

(11) **EP 1 476 687 B1**
(45) Veröffentlichungstag und Bekanntmachung des Hinweises auf die Patenterteilung: **20.07.2005**
(21) Anmeldenummer: 03714641.2
(22) Anmeldetag: 19.02.2003
(51) Int. Cl.: F16K 31/08

(54) **ELEKTROMAGNETISCHES VENTIL**
ELECTROMAGNETIC VALVE
SOUPAPE ELECTROMAGNETIQUE

(30) Priorität: 19.02.2002 DE 10206778
(43) Veröffentlichungstag der Anmeldung: 17.11.2004
(73) Patentinhaber: AWECO APPLIANCE SYSTEMS GmbH & Co. KG, 88099 Neukirch (DE)
(72) Erfinder: OTT, Hubert, 88212 Ravensburg (DE); GRAU, Thomas, 88260 Argenbühl (DE)
(74) Vertreter: Patentanwälte Eisele, Otten, Roth & Dobler
(86) Internationale Anmeldenummer: PCT/DE2003/000516
(87) Internationale Veröffentlichungsnummer: WO 2003/071176

(56) Entgegenhaltungen:
- GB-A- 1 417 669
- US-A- 2 983 278

## Beschreibung

Die Erfindung betrifft ein elektromagnetisches Ventil nach dem Oberbegriff des Anspruchs 1.

Elektromagnetische, insbesondere bistabile Ventile, werden in vielfältigen Anwendungen, beispielsweise in Fluidkreisläufen von Haushaltsgeräten wie Kühlschränken, Kaffeemaschinen, aber auch in anderen Gebieten, beispielsweise auf dem Gebiet der Analytik oder der Medizintechnik eingesetzt.

In den meisten Anwendungsbereichen, wie beispielsweise dem Anwendungsbereich der Haushaltsgeräte, werden hierbei Ventile bevorzugt, die eine kompakte Bauweise aufweisen und darüber hinaus mit möglichst wenig Aufwand herzustellen und zu montieren sind. Um diesem Zweck gerecht zu werden, sind in der jüngsten Vergangenheit verschiedene Entwicklungen bekannt geworden (vgl. DE 199 14 972 A1).

US 2 983 278 A offenbart ein elektromagnetischen Ventil mit zwei Schaltstellungen zwischen einem Ventilsitz und einer weiterin Anschlugfläche (zweiter Ventilsitz) gemäß dem Oberbegriff des Anspruchs 1.

Ausgehend von Ventilen gemäß diesem Stand der Technik hat die Erfindung die Aufgabe, ein Ventil vorzuschlagen, das besonders günstig herzustellen ist.

Diese Aufgabe wird bei einem Ventil gemäß dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Ventil dadurch aus, dass im Bereich der Ventilkammer, die zwischen zwei Polschuhen ausgebildet ist, ein Abstandselement vorgesehen ist, das den Abstand der die Anschlagflächen für die Endstellung des Ventilkörpers oder einen Ventilsitz aufweisenden Bauelemente, z. B. der Polschuhe festlegt. Dieser Abstand ist für die Funktionsfähigkeit des Ventils von großer Bedeutung. Die genaue Lage der Endpositionen des Ventilkörpers in seinen verschiedenen Schaltstellungen ist für viele Ventileigenschaften von Bedeutung. So ist die Anzugskraft des Ventilkörpers auf den Ventilsitz abhängig von der Lage des Ventilsitzes im Bezug zur Form und Stärke des Magnetfeldes, das den Ventilkörper auf dem Ventilsitz hält. Weiterhin ist der Abstand der Anschlagflächen des Ventilkörpers in seinen verschiedenen Schaltstellungen dahingehend von Bedeutung, dass hierdurch die Beschleunigungsstrecke und somit der Aufprallimpuls des Ventilkörpers beeinflusst wird. Schwankungen in dem Abstand können sich dementsprechend in unterschiedlichen Geräuschentwicklungen und Verschleißerscheinungen des Ventils bemerkbar machen.

Auch für den freien Strömungsquerschnitt bei geöffnetem Ventil ist der fragliche Abstand maßgebend.

Um bei der Montage des Ventils bezüglich dieses Abstandes möglichst geringe Toleranzen zuzulassen, wird bislang ein beträchtlicher Fertigungsaufwand betrieben.

Durch die erfindungsgemäße Verwendung eines Abstandselementes, das zwischen die die Anschlagflächen oder den Ventilsitz für den Ventilkörper aufweisenden Bauelemente, z.B. zwischen den beiden Polschuhen im Bereich der Ventilkammer eingelegt wird, ist die Montage des Ventils erheblich vereinfacht. Die beiden Polschuhe bzw. die die Anschlagflächen oder den Ventilsitz für den Ventilkörper aufweisenden Bauelemente können auf Anschlag unter Verwendung des Abstandselementes zusammengefügt werden, wodurch sich eine klar definierte relative Position zueinander ergibt. Die Toleranz bei der Herstellung dieses Abstandes entspricht der Maßtoleranz des Abstandselementes.

Weiterhin wird das Gehäuse des Ventils als Rohr ausgebildet, in das alle wesentlichen Ventilkomponenten einzusetzen sind. In einer besonders einfachen Ausführungsform der Erfindung beschränken sich diese Ventilelemente auf die Polschuhe, das Abstandselement gegebenenfalls mit Filter, sowie den Ventilkörper.

Ein solches Rohr, vorzugsweise in Form eines Zylinderrohrs, ist durch einfaches Ablängen aus einem handelsüblichen Rohrmaterial, beispielsweise aus Edelstahl, erhältlich und bietet darüber hinaus den Vorteil, dass es aufgrund seiner zylindrischen Form problemlos in das Innere einer Steuerspule einzufügen ist.

Zum dichten Abschluss der Ventilkammer werden zweckmäßigerweise die Polschuhe nach dem Einfügen in das Zylinderrohr mit diesem verbunden, beispielsweise im Falle eines Edelstahlrohres bevorzugt verschweißt. Eine Verschweißung lässt sich von außen durch Laserschweißen bei hoher Dichtigkeit herstellen. Andere Verbindungsformen, beispielsweise durch Verpressen oder dergleichen, sind jedoch an dieser Stelle ebenfalls denkbar.

In einer bevorzugten Ausführungsform der Erfindung werden die beiden Bauelemente, die die Anschlagflächen, beispielsweise einen Ventilsitz für den Ventilkörper aufweisen, unmittelbar auf Anschlag an das Abstandselement angefügt. Grundsätzlich können noch weitere Bauelemente zusätzlich zum Abstandselement eingefügt werden, durch den unmittelbaren Anschlag am Abstandselement werden jedoch anderweitige Fehlerquellen ausgeschlossen.

Bevorzugt werden hierbei die Polschuhe so ausgebildet, dass sie die Anschlagflächen für den Ventilkörper, z.B. einen Ventilsitz aufweisen, so dass mit der Montage der Polschuhe durch Anfügen an das Abstandselement die Ventilkammer maßgenau realisiert wird. In dieser Ausführungsform wird ein Ventilsitz für den Ventilkörper bevorzugt unmittelbar in einen Polschuh eingearbeitet, so dass weitere etwaige fehlerverursachende Bauelemente entbehrlich sind.

Bevorzugt wird das Abstandselement so ausgebildet, dass ein Fluiddurchlass vorhanden ist. Dies sorgt für einen freien Fluiddurchfluss durch die Ventilkammer durch den Ventilsitz in eine erste, als Abfluss dienende Fluidleitung. Der Durchlass durch das Abstandselement stellt bei geöffneter Ventilstellung die Verbindung zwischen dieser Fluidleitung und einer zweiten dementsprechend als Zulaufleitung dienenden Fluidleitung her.

Sowohl die erste als auch die zweite Fluidleitung werden bevorzugt als Bohrungen in den beiden Polschuhen angebracht, so dass sich auch hier weitere aufwändige konstruktive Maßnahmen erübrigen.

Der Außenanschluss der beiden Fluidleitungen wird in einer besonders vorteilhaften Ausführungsform dadurch hergestellt, dass am ausgangseitigen Ende der als Fluidleitung dienenden Bohrungen der Polschuhe Rohrleitungen eingesetzt und dort verbunden, beispielsweise verlötet, werden.

In einer besonderen Ausführungsform der Erfindung wird das Abstandselement hülsenförmig ausgebildet. Zum einen ergibt sich hierdurch eine symmetrische Anschlagfläche für die anzufügenden Bauelemente, beispielsweise die Polschuhe, zum anderen ergibt ein hülsenförmiges Abstandselement eine umfangseitig gute Führung an der Außenwand der Ventilkammer. Ein hülsenförmiges Abstandselement ist demnach in radialer Richtung mit entsprechender Anpassung an die Innenkontur der Ventilkammer nach dem Einsetzen gut in radialer Richtung fixiert.

In einer besonders vorteilhaften Ausführungsform wird das Abstandselement zugleich mit Führungselementen für den Ventilkörper versehen. Derartige Führungselemente bzw. die dadurch bewirkte gute Führung des Ventilkörpers in seiner Schaltbewegung beim Umschalten des Ventils bringen mehrere Vorteile mit sich. Zum einen ist eine stets zentrische Position des Ventilkörpers in Bezug auf den Ventilsitz mit derartigen Führungselementen gewährleistet. Insbesondere erfolgt der Aufprall des Ventilkörpers zentrisch. Bislang war ein z.B. durch das Fluid verursachter exzentrischer Einschlag des Ventilkörpers auf dem Ventilsitz möglich, wodurch sich ein erhöhter Verschleiß ergab. Weiterhin ist ein solches Führungselement durch die Zentrierung des Ventilkörpers während der gesamten Bewegung im Hinblick auf die Geräuschentwicklung und die Verschleißminderung von Vorteil. Auch ein Verdrehen oder Verkanten des Ventilkörpers lässt sich mit Hilfe solcher Führungselemente weitgehend unterbinden, wodurch sich ebenfalls eine geringere Geräuschentwicklung ergibt.

In einer besonderen Ausführungsform der Erfindung, insbesondere bei einem hülsenförmigen Abstandselement, werden die Führungselemente als innere, radial abstehende Rippen ausgebildet. Derartige Führungselemente können bei der Fertigung des Abstandselementes bereits in dieses eingeformt werden, so dass zusätzliche Bauelemente oder zusätzliche Bearbeitungsschritte nicht mehr erforderlich sind. Dies reduziert den Fertigungsaufwand für diese Ausführungsform mit Führungselementen erheblich. Darüber hinaus lässt sich mit derartigen Führungsrippen die axiale Führung des Ventilkörpers über seine gesamte Bewegungslänge verwirklichen, wobei zugleich zwischen derartigen Rippen ein Durchlass für das Fluid und somit eine Verbindung zwischen den beiden Fluidleitungen ohne Beeinträchtigung durch das Abstandselement bzw. die Führungselemente möglich ist.

Ein erfindungsgemäßes Abstandselement lässt sich in vorteilhafter Weise aus Kunststoff, z.B. durch Spritzgießen, fertigen. Hierdurch wird der Fertigungsaufwand äußerst gering, wobei durch geeignete Materialauswahl für das Abstandselement ohne weiteres eine Verwendung des Ventils auch für chemisch-aggressive Fluide denkbar ist.

In einer besonderen Ausführungsform der Erfindung wird das Abstandselement mit einem Filterelement versehen. Durch ein solches Filterelement, das beispielsweise als Siebeinsatz ausgebildet werden kann, ist es möglich, Schmutzpartikel aus dem Bereich des Ventilsitzes und des Ventilkörpers fernzuhalten. Hierdurch wird zum einen eine dauerhafte Dichtfunktion und Druckfestigkeit und zum anderen ein geringerer Verschleiß und somit eine erhöhte Lebensdauer des Ventils gewährleistet.

Diese Ausführung ist vor allem beim Einsatz in geschlossenen Fluidkreisläufen von Vorteil, in denen das in dem geschlossenen Kreislauf befindliche Fluid einmal komplett durchgefiltert wird und anschließend keine weitere Schmutzfracht anfällt, die das Filterelement verstopfen kann. Das Filterelement muss in dieser Ausführungsform so dimensioniert sein, dass alle Schmutzpartikel, die beispielsweise bei der Montage des Ventils oder sonstigen Produktionsvorgängen entstehen können, ohne wesentliche Beeinträchtigung der Filterdurchlässigkeit herausgefiltert werden können.

Der Zufluss des Ventils wird bevorzugt durch eine exzentrisch angeordnete Bohrung in einem Polschuh realisiert, wodurch zugleich die Vorschaltung des Filterelementes in der Nähe des Außenumfangs der Ventilkammer möglich ist. Das Filter- bzw. Siebelement kann in diesem Fall scheibenförmig, z.B. als Ringscheibe, ausgebildet werden.

Ein erfindungsgemäßes Ventil wird bevorzugt als bistabiles Ventil ausgebildet, wozu wenigstens ein Permanentmagnet, in der bevorzugten Ausführungsform zwei Permanentmagnete vorzusehen sind, die den Ventilkörper in seiner jeweils angesteuerten Schaltstellung durch das permanente Magnetfeld halten. Der Ventilkörper wird zu diesem Zweck sowie auch zum Zwecke der Steuerung durch eine elektromagnetische Steuerspule zweckmäßigerweise wenigstens teilweise aus magnetischem oder magnetisierbarem Material hergestellt.

Der bzw. die Permanentmagnete werden vorzugsweise als Ringmagnete ausgebildet, die ein umfangseitig gleich verteiltes drehsymmetrisches Magnetfeld erzeugen und darüber hinaus gut in eine entsprechend zylindrisch ausgebildete Aufnahme ein- bzw. aufzusetzen sind.

Hierzu wird in einer besonderen Ausführungsform auf jedem Polschuh ein entsprechender zylindrischer Vorsprung ausgebildet, auf den ein Ringmagnet aufgeschoben werden kann. Hierdurch ist eine radiale Fixierung der Permanentmagnete vorgegeben. Die axiale Fixierung kann durch entsprechende Ausbildung des Abstandselementes bzw. dessen Führungselemente bewerkstelligt werden, so dass die Gesamtmontage auch eines bistabilen Ventils besonders einfach erfolgen kann. In der beschriebenen Weiterbildung der Erfindung müssen lediglich die Polschuhe, der Ventilkörper, das Abstandselement, gegebenenfalls mit integriertem Filter, sowie die Permanentmagnete in ein Zylinderrohr eingeschoben und durch Befestigung der Polschuhe, z.B. durch Verschweißen, fixiert werden. Die so hergestellte Einheit kann anschließend als komplette Ventileinheit in eine Steuerspule eingesetzt werden, so dass sich die gewünschte kompakte Gesamteinheit ergibt.

Zur Fixierung der Permanentmagnete werden bevorzugt entsprechende Aufnahmen im Abstandselement angebracht, um durch Formschluss mit den Permanentmagneten die gewünschte definierte Position der Permanentmagnete zu bewirken. Eine solche Aufnahme kann in einer besonderen Ausführungsform in Form von beispielsweise stift- oder kegelartigen Erhöhungen vorgesehen werden, die für den Formschluss mit den Permanentmagneten sorgen. Der Formschluss kann darüber hinaus durch eine verformbare, insbesondere elastisch verformbare Ausbildung einer solchen Aufnahme verbessert werden.

Für den Ventilkörper bzw. den Ventilsitz hat sich eine wenigstens teilweise sphärische Form bewährt, in der bevorzugten Ausführung der Erfindung wird demnach ein Ventilkörper verwendet, der eine Kugel umfasst, deren Durchmesser an einen sphärisch ausgebildeten Ventilsitz angepasst ist. Durch die sphärische Form des Ventilsitzes und der Kugel ergibt sich bereits bei kleinem Hub des Ventilkörpers ein Öffnungsspalt mit vergleichsweise großem Querschnitt.

In einer besonders vorteilhaften Weiterbildung dieser Ausführungsform wird der Ventilkörper selbst als Kugel, beispielsweise als Stahlkugel gewählt. Diese Ausführungsform bietet den Vorteil eines Ventilkörpers mit optimaler Passform an einen sphärischen Ventilsitz bei sehr geringer Masse. Die geringe Masse sorgt für eine geringere Impulseinwirkung auf den Ventilsitz beim Schalten des Ventils und somit für einen geringeren Verschleiß sowie eine kleinere Geräuschentwicklung.

Ein erfindungsgemäßes Ventil kann als sogenanntes 2/2-Ventil ausgebildet werden, wobei in diesem Fall die beschriebenen zwei Fluidleitungen vorgesehen werden. Die beiden Schaltzustände des Ventils definieren hierbei einen offenen Ventilzustand, bei dem der Ventilkörper vom Ventilsitz abgehoben und somit die beiden Fluidleitungen miteinander verbunden sind. Im geschlossenen Ventilzustand hingegen liegt der Ventilkörper am Ventilsitz auf, so dass die Fluidverbindung unterbrochen ist.

Ein erfindungsgemäßes Ventil kann auch als sogenanntes 3/2-Ventil ausgestaltet werden. Hierbei ist eine dritte Fluidleitung sowie ein zweiter Ventilsitz vorzusehen.

Die beiden Abflussleitungen werden in diesem Fall bevorzugt durch zentrische Bohrungen in den Polschuhen angebracht, wobei auf der dem Ventilkörper zuweisenden Seite jeweils ein Ventilsitz am Polschuh angebracht, bevorzugt in diesen eingeformt wird. Die zentrische Anordnung der Abflussleitungen ermöglicht die zentrierte Lage des Ventilkörpers und somit eine gleichmäßige drehsymmetrische Einwirkung von Ringmagneten einerseits als auch der außen befindlichen Steuerspule andererseits.

Ein Ausführungsbeispiel der Erfindung ist in der Zeichnung dargestellt und wird anhand der Figuren nachfolgend näher erläutert.

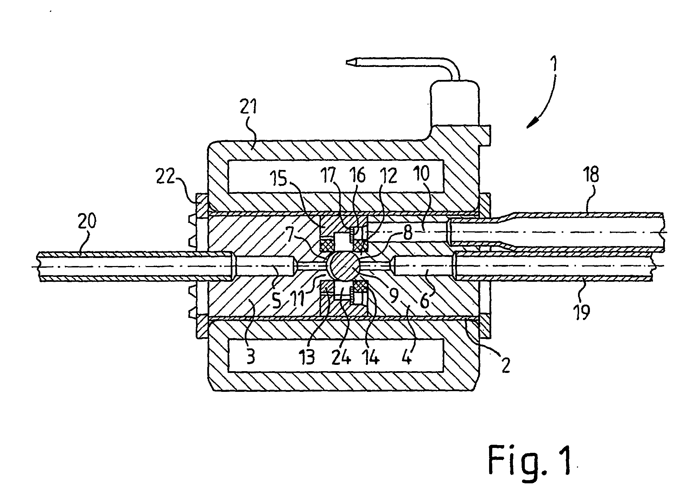

Im Einzelnen zeigen
- Fig. 1: einen Längsschnitt durch ein erfindungsgemäßes 3/2-Ventil und
- Fig. 2: eine perspektivische Darstellung eines erfindungsgemäßen Abstandselementes.

Das Ventil 1 umfasst ein als Zylinderrohr ausgebildetes Ventilgehäuse 2, in das zwei Polschuhe 3, 4 eingesetzt sind. In den Polschuhen 3, 4 ist jeweils eine Bohrung 5, 6 angebracht, die als Fluidleitungen dienen. Die Fluidleitungen 5, 6 münden in zwei Ventilsitze 7, 8, die sphärisch geformt und somit an die Form eines als Kugel ausgebildeten Ventilkörpers 9 angepasst sind. Im dargestellten Schaltzustand schließt der Ventilkörper 9 den Ventilsitz 8.

Im Polschuh 4 ist neben der zentrischen Bohrung 6 eine weitere exzentrische Bohrung 10 angebracht, die als Zufluss für das Fluid dient.

Die beiden Polschuhe 3, 4 sind mit zylindrischen Vorsprüngen 11, 12 in Form von Querschnittsverjüngungen versehen, auf die zwei Ringmagnete 13, 14 aufgesetzt sind. Die Ringmagnete 13, 14 schließen in etwa bündig mit den Polschuhen 3, 4 bzw. den Ventilsitzen 7, 8 ab.

Eine erfindungsgemäße Abstandshülse 15 ist zwischen die Polschuhe eingesetzt und definiert so exakt den Abstand zwischen den Polschuhen 3, 4 bzw. den Ventilsitzen 7, 8. Ein Sieb 16 ist als Ringscheibe ausgebildet und in die Abstandshülse 15 eingelegt, die hierzu mit einer Schulter 17 versehen ist.

Die Polschuhe 3, 4 sind auf nicht näher dargestellte Weise mit dem Ventilgehäuse 2 verbunden, in der Edelstahlversion geschweißt, vorzugsweise von außen lasergeschweißt.

Anschlussrohre 18, 19, 20 sind in die Bohrungen 5, 6 und 10 eingesetzt, die zu diesem Zweck endseitig etwas verbreitert sind. Die Anschlussrohre 18, 19, 20 sind dicht mit den Polschuhen 3, 4 verbunden, z.B. verlötet.

Das gesamte Ventil ist in eine Steuerspule 21 eingesetzt und stirnseitig über ein Jochblech 22, das als Kastenjoch oder in U-Form ausgebildet sein kann, fixiert, indem das Ventilgehäuse 2 und teilweise die Polschuhe 3, 4 an dem Jochblech 22 anliegen.

Die Montage des Ventils ist denkbar einfach. Die verschiedenen Ventilkomponenten, d.h. die Polschuhe 3, 4, der Ventilkörper 9 mit aufgesetzten Ringmagneten 13, 14 sowie die Abstandshülse 15 werden in das Gehäuse formschlüssig eingeführt und dort verschweißt. Die Anschlussrohre 18, 19, 20 werden bevorzugt vor dem Verschweißen in den Polschuhen 3, 4 angebracht. Somit ist das Ventil fertiggestellt und muss zur Montage nur noch in die Steuerspule 21 eingesetzt und mittels der Jochbleche 22 fixiert werden.

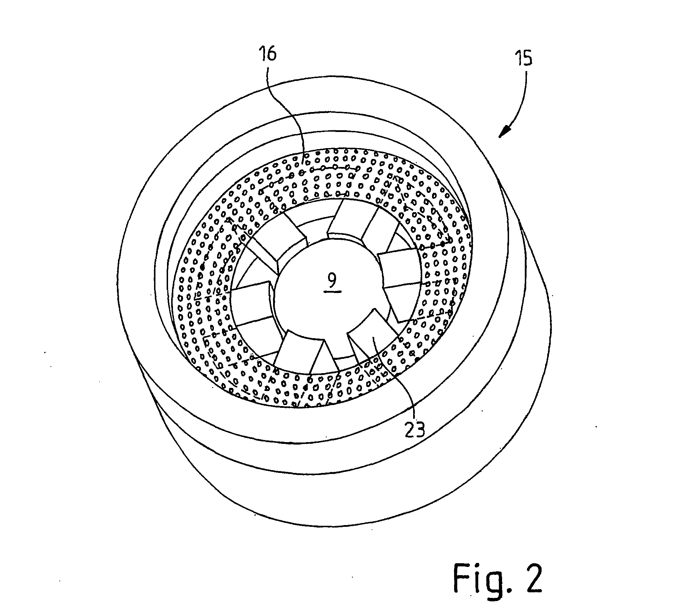

Die perspektivische Darstellung gemäß Fig. 2 der Abstandshülse 15 mit eingesetztem Ventilkörper 9 zeigt Führungsrippen 23, die radial nach innen abstehen und die den Ventilkörper 9 bildende Kugel in ihrer Linearbewegung entlang der Ventilachse führen. Weiterhin ist in dieser Darstellung das Sieb 16 erkennbar, das in die Abstandshülse 15 eingelegt ist. Die Führungsrippen 23 bilden zugleich einen Durchlass für das Fluid von der als Zufluss dienenden exzentrischen Bohrung 10 im Polschuh 4 in die Ventilkammer 24, in der sich der Ventilkörper 9 befindet. Somit ist über die Führungsrippen 23 je nach Schaltstellung des Ventils auch der Durchlass zu den Abflüssen 5, 6 über die Ventilsitze 7, 8 gewährleistet. Der Ringmagnet 14 sorgt hierbei für den inneren Abschluss des Zuflusses 10 im Bereich des Siebs 16, so dass sichergestellt ist, dass das Fluid aus der Bohrung 10 stets das Sieb 16 passieren muss, um ins Innere der Ventilkammer 24 zu gelangen.

Die Abstandshülse 15, die das Sieb 16 trägt, dient zum einen zur exakten Einstellung des Abstands der Polschuhe 3, 4 bzw. deren Ventilsitze 7, 8 und zum anderen über die Führungsrippen 23 für eine gute Axialführung des kugelförmigen Ventilkörpers 9. Die Montage wird durch die Verwendung der Abstandshülse 15 erheblich vereinfacht. Durch die Führungsrippen 23 wird der Geräuschpegel beim Betrieb des Ventils reduziert.

Darüber hinaus ist in der vorliegenden Ausführungsform aufgrund der kugelförmigen Ausgestaltung des Ventilkörpers 9 sowie der korrespondierenden sphärischen Form der Ventilsitze 7, 8 nur ein geringer Schaltweg des Ventilkörpers 9 erforderlich, um einen Spalt zwischen Ventilsitz 7 bzw. 8 und dem Ventilkörper 9 zu erzeugen, der einen ausreichenden Strömungsquerschnitt bietet.

Durch die kurzen Schaltwege des Ventilkörpers 9 wird wiederum die Geräuschentwicklung reduziert. Durch das Anbringen der Ringmagnete in unmittelbare Nähe des Ventilsitzes können diese kleiner dimensioniert werden und dennoch einen ausreichend hohen Anpressdruck des Ventilkörpers 9 auf den jeweiligen Ventilsitz 7, 8 erzeugen.

Durch die Kugelform ist zudem ein Ventilkörper 9 mit sehr geringer Masse verwendbar, so dass die Geräuschentwicklung und der Verschleiß beim Aufprall auf dem jeweiligen Ventilsitz 7, 8 deutlich reduziert ist. Hierdurch wird auch die Herstellung der Ventilsitze 7, 8 erleichtert, da diese mit geringerer Härte verwendet werden können. Darüber hinaus sind Stahlkugeln mit ausreichender Güte kostengünstig im Handel erhältlich.

Über das Sieb 16 wird gewährleistet, dass keine Schmutzpartikel in den Bereich der Ventilsitze 7, 8 gelangen können, so dass die Dichtfunktion verbessert und der Verschleiß reduziert wird. Darüber hinaus werden magnetische oder magnetisierbare Partikel aus dem Fluidstrom auch an dem in der Strömung stehenden Permanentmagneten 14 festgehalten.

Über die Ringmagnete 13, 14 ergibt sich eine bistabile Ausführung des Ventils. Bei Verwendung geeigneter Permanentmagnete können diese mit ausreichender chemischer und thermischer Resistenz bereitgestellt werden, um einen Betrieb auch unter schweren Einsatzbedingungen, beispielsweise bei hohen Temperaturen oder mit chemischaggressiven Fluiden zu ermöglichen. Zum Umschalten der Schaltposition ist bei dieser bistabilen Ausführungsform lediglich ein kurzer Steuerimpuls über die Steuerspule 21 erforderlich, um die Schaltstellung zu wechseln, so dass das Ventil 1 insgesamt nicht nur eine mit wenig Aufwand herstellbare kompakte Ventileinheit bildet, sondern darüber hinaus auch sehr stromsparend ist.

### Bezugszeichenliste:

- 1: Ventil
- 2: Ventilgehäuse
- 3: Polschuh
- 4: Polschuh
- 5: Bohrung
- 6: Bohrung
- 7: Ventilsitz
- 8: Ventilsitz
- 9: Ventilkörper
- 10: Bohrung
- 11: Vorsprung
- 12: Vorsprung
- 13: Ringmagnet
- 14: Ringmagnet
- 15: Abstandshülse
- 16: Sieb
- 17: Schulter
- 18: Anschlussrohr
- 19: Anschlussrohr
- 20: Anschlussrohr
- 21: Steuerspule
- 22: Jochblech
- 23: Führungsrippen
- 24: Ventilkammer

## Patentansprüche

1. Ventil mit zwei Polschuhen (3,4), wobei wenigstens ein Polschuh (9) mit einer ersten Fluidleitung (5) und einem ersten Ventilsitz (7) versehen ist, und wobei die Fluidleitung (8) über den Ventilsitz (7) mit einer Ventilkammer (24) verbunden ist, in der ein Ventilkörper (8) zwischen wenigstens zwei Schaltstellungen zwischen dem Ventilsitz (7) und wenigstens einer weiteren Anschlagfläche (8) bewegbar ist, **dadurch gekennzeichnet, dass** wenigstens ein Abstandselement (15) im Bereich der Ventilkammer (24) vorhanden ist, das den Abstand des Ventilsitzes (7) von der weiteren Anschlagfläche (8) bestimmt, und dass die Polschuhe (3, 4) sowie das Abstandselement (15) in ein rohrförmiges Ventilgehäuse (2) eingesetzt sind.

2. Ventil nach Anspruch 1 **dadurch gekennzeichnet, dass** der Ventilsitz (7) sowie die weitere Anschlagsfläche (8) in jeweils einen Polschuh (3, 4) eingeformt sind und die Polschuhe (3, 4) unmittelbar an das Abstandselement (15) angefügt sind.

3. Ventil nach einem der vorgenannten Ansprüche **dadurch gekennzeichnet, dass** das Abstandselement (15) einen Fluiddurchlass aufweist.

4. Ventil nach einem der vorgenannten Ansprüche **dadurch gekennzeichnet, dass** Außenanschlussrohre (18, 19, 20) für die Fluidführung in wenigstens einem Polschuh (3, 4) angebracht sind.

5. Ventil nach einem der vorgenannten Ansprüche **dadurch gekennzeichnet, dass** das Abstandselement (15) hülsenförmig ausgebildet ist.

6. Ventil nach einem der vorgenannten Ansprüche **dadurch gekennzeichnet, dass** das Abstandselement (15) Führungselemente (23) für den Ventilkörper (9) umfasst.

7. Ventil nach einem der vorgenannten Ansprüche **dadurch gekennzeichnet, dass** das Führungselement (23) als innere radiale Rippen am Abstandselement (15) ausgebildet ist.

8. Ventil nach einem der vorgenannten Ansprüche **dadurch gekennzeichnet, dass** das Abstandselement (15) wenigstens teilweise aus Kunststoff gefertigt ist.

9. Ventil nach einem der vorgenannten Ansprüche **dadurch gekennzeichnet, dass** das Abstandselement (15) mit einem Filterelement (16) versehen ist.

10. Ventil nach einem der vorgenannten Ansprüche **dadurch gekennzeichnet, dass** die zweite Fluidleitung (10) als exzentrische Bohrung in einem Polschuh (4) ausgebildet ist.

11. Ventil nach einem der vorgenannten Ansprüche **dadurch gekennzeichnet, dass** wenigstens ein Permanentmagnet (13, 14) vorgesehen ist.

12. Ventil nach einem der vorgenannten Ansprüche **dadurch gekennzeichnet, dass** der Permanentmagnet (13, 14) innerhalb des rohrförmigen Ventilgehäuses (2) angeordnet sind.

13. Ventil nach einem der vorgenannten Ansprüche **dadurch gekennzeichnet, dass** der Permanentmagnet (13, 14) als Ringmagnete ausgebildet ist.

14. Ventil nach einem der vorgenannten Ansprüche **dadurch gekennzeichnet, dass** der Permanentmagnet (13, 14) auf einem durch eine Querschnittsverjüngung gebildeten Vorsprung (11, 12) eines Polschuhs (3, 4) aufgesetzt ist.

15. Ventil nach einem der vorgenannten Ansprüche **dadurch gekennzeichnet, dass** das Abstandselement (15) mit einer Aufnahme für einen Permanentmagneten (13, 14) vorgesehen ist.

16. Ventil nach Anspruch 16, **dadurch gekennzeichnet, dass** die Aufnahme Erhöhungen umfasst, die den Formschluss des Abstandselementes (15) mit wenigstens einem Permanentmagneten bewirken.

17. Ventil nach Anspruch 17, **dadurch gekennzeichnet, dass** die Erhöhungen verformbar sind.

18. Ventil nach Anspruch 17 oder 18, **dadurch gekennzeichnet, dass** die Erhöhungen elastisch sind.

19. Ventil nach einem der vorgenannten Ansprüche **dadurch gekennzeichnet, dass** das rohrförmige Ventilgehäuse (2) in eine Steuerspule (21) eingesetzt ist.

20. Ventil nach einem der vorgenannten Ansprüche **dadurch gekennzeichnet, dass** der Ventilkörper (9) eine Kugel umfasst und der Ventilsitz (7, 8) wenigstens teilweise sphärisch geformt ist.

21. Ventil nach einem der vorgenannten Ansprüche **dadurch gekennzeichnet, dass** der Ventilkörper (9) eine Kugel ist.

22. Ventil nach einem der vorgenannten Ansprüche **dadurch gekennzeichnet, dass** eine dritte Fluidleitung (6) und ein zweiter Ventilsitz (8) zur Bildung eines sogenannten 3/2-Ventils vorgesehen ist.

## Claims

1. Valve with two pole shoes (3, 4), wherein at least one pole shoe (3) is provided with a first fluid line (5) and a first valve seat (7), and wherein the fluid line (5) is connected via the valve seat (7) to a valve chamber (24), in which a valve body (8) can be moved between at least two switching positions between the valve seat (7) and at least one further stop face (8), **characterised in that** at least one spacer element (15) is provided in the region of the valve chamber (24), which determines the spacing of the valve seat (7) from the further stop face (8), and **in that** the pole shoes (3, 4) and the spacer element (15) are inserted into a tubular valve housing (2).

2. Valve according to claim 1, **characterised in that** the valve seat (7) and the further stop face (8) are moulded into a respective pole shoe (3, 4) and the pole shoes (3, 4) are attached directly to the spacer element (15).

3. Valve according to any one of the preceding claims, **characterised in that** the spacer element (15) has a fluid passage.

4. Valve according to any one of the preceding claims, **characterised in that** outer connection tubes (18, 19, 20) for fluid guidance are attached in at least one pole shoe (3, 4).

5. Valve according to any one of the preceding claims, **characterised in that** the spacer element (15) is sleeve-shaped.

6. Valve according to any one of the preceding claims, **characterised in that** the spacer element (15) comprises guide elements (23) for the valve body (9).

7. Valve according to any one of the preceding claims, **characterised in that** the guide element (23) is formed as inner radial ribs on the spacer element (15).

8. Valve according to any one of the preceding claims, **characterised in that** the spacer element (15) is manufactured at least partially from plastics material.

9. Valve according to any one of the preceding claims, **characterised in that** the spacer element (15) is provided with a filter element (16).

10. Valve according to any one of the preceding claims, **characterised in that** the second fluid line (10) is formed as an eccentric hole in a pole shoe (4).

11. Valve according to any one of the preceding claims, **characterised in that** at least one permanent magnet (13, 14) is provided.

12. Valve according to any one of the preceding claims, **characterised in that** the permanent magnet (13, 14) is arranged inside the tubular valve housing (2).

13. Valve according to any one of the preceding claims, **characterised in that** the permanent magnet (13, 14) is formed as annular magnets.

14. Valve according to any one of the preceding claims, **characterised in that** the permanent magnet (13, 14) is placed on a projection (11, 12) of a pole shoe (3, 4) formed by a cross-sectional taper.

15. Valve according to any one of the preceding claims, **characterised in that** the spacer element (15) is provided with a receiver for a permanent magnet (13, 14).

16. Valve according to claim 16, **characterised in that** the receiver comprises elevations which bring about the positive fit of the spacer element (15) with at least one permanent magnet.

17. Valve according to claim 17, **characterised in that** the elevations are deformable.

18. Valve according to claim 17 or 18, **characterised in that** the elevations are elastic.

19. Valve according to any one of the preceding claims, **characterised in that** the tubular valve housing (2) is inserted into a control coil (21).

20. Valve according to any one of the preceding claims, **characterised in that** the valve body (9) comprises a sphere and the valve seat (7, 8) is formed at least partially spherically.

21. Valve according to any one of the preceding claims, **characterised in that** the valve body (9) is a sphere.

22. Valve according to any one of the preceding claims, **characterised in that** a third fluid line (6) and a second valve seat (8) are provided to form a so-called 3/2-way valve.

## Revendications

1. Vanne avec deux épanouissements polaires (3, 4), au moins un épanouissement polaire (3) étant muni d'une première conduite de fluide (5) et d'un premier siège de vanne (7), et la conduite de fluide (5) étant reliée par l'intermédiaire du siège de vanne (7) à une chambre de vanne (24) dans laquelle un corps de vanne (9) est mobile entre au moins deux positions de commutation entre le siège de vanne (7) et au moins une autre surface de butée (8),
**caractérisée en ce qu'**il est prévu dans la zone de la chambre de vanne (24) au moins un élément d'écartement (15) qui détermine l'écart entre le siège de vanne (7) et l'autre surface de butée (8) et **en ce que** les épanouissements polaires (3, 4), ainsi que l'élément d'écartement (15), sont insérés dans un boîtier de vanne tubulaire (2).

2. Vanne selon la revendication 1,
**caractérisée en ce que** le siège de vanne (7), ainsi que l'autre surface de butée (8), sont chacun formés dans un épanouissement polaire (3, 4) et les épanouissements polaires (3, 4) sont directement accolés à l'élément d'écartement (15).

3. Vanne selon l'une des revendications précédentes,
**caractérisée en ce que** l'élément d'écartement (15) présente un passage de fluide.

4. Vanne selon l'une des revendications précédentes,
**caractérisée en ce que** des tuyaux de raccordement extérieurs (18, 19, 20) pour le guidage de fluide sont montés dans au moins un épanouissement polaire (3, 4).

5. Vanne selon l'une des revendications précédentes,
**caractérisée en ce que** l'élément d'écartement (15) est concu en forme de douille.

6. Vanne selon l'une des revendications précédentes,
**caractérisée en ce que** l'élément d'écartement (15) comprend des éléments de guidage (23) pour le corps de vanne (9).

7. Vanne selon l'une des revendications précédentes,
**caractérisée en ce que** l'élément de guidage (23) est conçu comme des nervures radiales intérieures sur l'élément d'écartement (15).

8. Vanne selon l'une des revendications précédentes,
**caractérisée en ce que** l'élément d'écartement (15) est réalisé au moins en partie en matière plastique.

9. Vanne selon l'une des revendications précédentes,
**caractérisée en ce que** l'élément d'écartement (15) est muni d'un élément filtrant (16).

10. Vanne selon l'une des revendications précédentes,
**caractérisée en ce que** la deuxième conduite de fluide (10) est conçue comme un perçage excentré dans un épanouissement polaire (4).

11. Vanne selon l'une des revendications précédentes,
**caractérisée en ce qu'**il est prévu au moins un aimant permanent (13, 14).

12. Vanne selon l'une des revendications précédentes,
**caractérisée en ce que** les aimants permanents (13, 14) sont agencés à l'intérieur du boîtier de vanne tubulaire (2).

13. Vanne selon l'une des revendications précédentes,
**caractérisée en ce que** l'aimant permanent (13, 14) est concu comme un aimant annulaire.

14. Vanne selon l'une des revendications précédentes,
**caractérisée en ce que** l'aimant permanent (13, 14) est posé sur une saillie (11, 12) d'un épanouissement polaire (3, 4) formée par un rétrécissement de section.

15. Vanne selon l'une des revendications précédentes,
**caractérisée en ce que** l'élément d'écartement (15) est muni d'un logement pour un aimant permanent (13, 14).

16. Vanne selon la revendication 15,
**caractérisée en ce que** le logement comprend des élévations qui provoquent l'assemblage par correspondance de forme de l'élément d'écartement (15) avec au moins un aimant permanent.

17. Vanne selon la revendication 16,
**caractérisée en ce que** les élévations sont déformables.

18. Vanne selon la revendication 16 ou 17,
**caractérisée en ce que** les élévations sont élastiques.

19. Vanne selon l'une des revendications précédentes,
**caractérisée en ce que** le boîtier de vanne tubulaire (2) est inséré dans une bobine de commande (21).

20. Vanne selon l'une des revendications précédentes,
**caractérisée en ce que** le corps de vanne (9) comporte une bille et le siège de vanne (7, 8) est de forme au moins en partie sphérique.

21. Vanne selon l'une des revendications précédentes,
**caractérisée en ce que** le corps de vanne (9) est une bille.

22. Vanne selon l'une des revendications précédentes,
**caractérisée en ce qu'**une troisième conduite de fluide (6) et un deuxième siège de vanne (8) sont prévus pour former une vanne 3/2.
